# EUROPÄISCHE PATENTSCHRIFT

(11) **EP 1 517 150 B1**
(45) Veröffentlichungstag und Bekanntmachung des Hinweises auf die Patenterteilung: **14.05.2008**
(21) Anmeldenummer: 04020004.0
(22) Anmeldetag: 24.08.2004
(51) Int. Cl.: G01P 5/00, G01P 5/22, G06T 7/20

(54) **Verfahren zur Bestimmung eines dreidimensionalen Geschwindigkeitsfeldes in einem Volumen**
Method for the determination of a three-dimensional velocity field in a volume
Méthode de détermination d'un champ de vitesse tridimensionnel dans un volume

(30) Priorität: 18.09.2003 DE 10343160
(43) Veröffentlichungstag der Anmeldung: 23.03.2005
(73) Patentinhaber: LaVision GmbH, 37081 Göttingen (DE)
(72) Erfinder: Wieneke, Bernhard, 37085 Göttingen (DE)
(74) Vertreter: Walther, Walther & Hinz GbR

(56) Entgegenhaltungen:
- US-A- 5 905 568
- WILLERT C: "STEREOSCOPIC DIGITAL PARTICLE IMAGE VELOCIMETRY FOR APPLICATION IN WIND TUNNEL FLOWS" MEASUREMENT SCIENCE AND TECHNOLOGY, IOP PUBLISHING, BRISTOL, GB, Bd. 8, Nr. 12, Dezember 1997 (1997-12), Seiten 1465-1479, XP000755950 ISSN: 0957-0233

## Beschreibung

Die Erfindung betrifft ein Verfahren zur Bestimmung eines dreidimensionalen Geschwindigkeitsfeldes in einem Volumen.

Ein Standardverfahren zur Messung von Geschwindigkeiten in Gasen oder Flüssigkeiten besteht in dem Particle Image Velocimetry (PIV)-Verfahren (DE 199 28 698 A1), bei dem die Strömung mit kleinen Teilchen versetzt wird und eine dünne Beobachtungsebene üblicherweise mit einem Laser zweimal kurz hintereinander beleuchtet und von einer senkrecht zur Beobachtungsebene positionierten Kamera aufgenommen wird, wobei diese Kamera in der Lage ist, zwei Bilder schnell hintereinander aufzunehmen. Diese Kamerabilder werden in kleine Interrogationsfenster unterteilt und an einem Ort x, y werden die beiden Interrogationsfenster zu den beiden Aufnahmezeitpunkten kreuzkorreliert, um durch den höchsten Korrelations-Peak den wahrscheinlichsten (dx, dy)-Verschiebungsvektor zwischen den beiden Interrogationsfenster zu bestimmen. Hierbei sind (dx, dy) die beiden Verschiebungsvektorkomponenten senkrecht zur Beobachtungsrichtung der Kamera. Teilt man den Verschiebungsvektor durch die Zeitdifferenz dt ergibt sich die Geschwindigkeit in dem jeweiligen Interrogationsfenster. Mit einer Kamera ergibt sich damit ein zweidimensionales Geschwindigkeitsfeld mit den beiden Geschwindigkeitskomponenten innerhalb der Beleuchtungsebene. Dieses Verfahren zeichnet sich dadurch aus, dass es relativ robust gegenüber Bildfehlern und Intensitätsrauschen und nicht zuordbaren Teilchen ist, die z. B. dadurch entstehen, dass Teilchen aus dem Lichtschnitt herauswandern.

Die Verwendung von Hochgeschwindigkeitskameras zur Durchführung von PIV-Verfahren ist aus der DE 44 08 072 A1 bekannt.

Die DE 198 01 615 A1 beschreibt ein Kalibrierverfahren für PIV-Verfahren für die Messung von Strömungsvorgängen.

Mit zwei Kameras können alle drei Geschwindigkeitskomponenten durch stereoskopische Verrechnung der Verschiebungen (dx₁, dy₁ und dx₂, dy₂) bestimmt werden (Stereo-PIV) (DE 199 28 698 A1 oder auch C. Willert: "Stereoscopic digital particle image velocimetry...", Meas. Sci.Technol. 8(1997), 1465-1478, XP 755950). Eine entsprechende Kalibrierung z. B. mit Hilfe einer Kalibrierplatte ist notwendig, um die beiden Kamerabilder aufeinander abzugleichen, und die Abhängigkeit gemessener Verschiebungen (dxₙ, dyₙ) von den räumlichen Verschiebungen (dₓ, d_{y}, d_{z}) zu bestimmen.

Alternativ ist aus der US 6,542,226 B1 ein Aufbau zur Messung der Strömungskomponenten bekannt, wobei eine Kamera die zwei Strömungskomponenten in der Ebene misst, während die zweite Kamera die dritte Strömungskomponente senkrecht zur Lichtschnittebene durch den Doppler-Shift vermisst.

Um nunmehr ein Geschwindigkeitsfeld nicht nur in einer Ebene, sondern in einem größeren Volumen zu messen, sind verschiedene Verfahren entwickelt worden. So kann zum einen ein Lichtschnitt durch ein Volumen schnell z. B. mit Hilfe eines Drehspiegels verschoben werden und mit einer entsprechend schnellen Kamera mehrere Ebenen in kurzer Zeit nacheinander aufgenommen werden. Da jede Ebene zweimal aufgenommen werden muss, ergeben sich starke Beschränkungen hinsichtlich des Zeitabstandes zwischen den Belichtungen und der Anzahl der Ebenen, die aufgenommen werden können. Mit modernen CMOS-Kameras, die z. B. mit 1 kHz hochauflösende Bilder aufnehmen können und z. B. acht Ebenen, ergibt sich ein minimales dt von 8 msec, das allerdings für viele Anwendungen zu lang ist, um schnelle Strömungen zu erfassen. Ferner werden die Ebenen nicht gleichzeitig aufgenommen, sondern nacheinander. Hierbei ist auch der optische Aufbau mit mechanischen Teilen relativ kompliziert.

Alternativ können auch mehrere Ebenen kurz hintereinander belichtet werden, und für jede Ebene kann eine Kamera vorgesehen sein, wie in der US 5,883,707 beschrieben.

Ein anderes Verfahren basiert auf der Aufnahme des kompletten Volumens mit zwei oder mehr Kameras gleichzeitig (US 5,905,568). Die beobachteten Teilchen werden in jedem Kamerabild lokalisiert und mittels Triangulation wird die (x,y,z)-Position der Teilchen bestimmt. Ein Teilchen im Bild 1 liegt dabei in Abhängigkeit von der Tiefe z im Kamerabild 2 entlang einer epipolaren Linie. Aus der Position zu unterschiedlichen Zeiten wird mit Hilfe eines Zuordnungsalgorithmus die Geschwindigkeit der Teilchen bestimmt (3D-Particle Tracking Velocimetry, 3D-PTV). Wie bei Stereo-PIV ist ebenfalls eine genaue Volumenkalibrierung der Kameras erforderlich. Nachteilig ist bei diesem Verfahren, dass die Teilchendichte relativ gering sein muss, da überlappende Teilchen zu Fehlern führen und bei dem Triangulationsschritt zu viele mögliche Teilchen auf den epipolaren Linien liegen und damit zu nicht existierenden Phantomteilchen führen.

Ein drittes Verfahren basiert auf holographischen Aufnahmen mit verschiedenen optischen Aufbauten. Die Teilchen werden mit zwei Laserpulsen kurz nacheinander beleuchtet und das Hologramm wird auf einer photographischen Platte gespeichert. Da jede Aufnahmeplatte erst einzeln entwickelt und aufwendig mit CCD-Kameras im Scanverfahren ausgelesen werden muss, ist dieses Verfahren nicht für industrielle Anwendungen geeignet, bei denen oft Tausende von Bildern notwendig sind, um statistische Aussagen über das Strömungsfeld zu treffen.

Zur Behebung der obigen Nachteile wird das nachfolgende Verfahren zur Bestimmung eines dreidimensionalen Geschwindigkeitsfeldes in einem Volumen vorgeschlagen.

Hierbei ist ebenfalls vorgesehen, dass durch Beleuchtung des Volumens die in dem Volumen befindlichen Teilchen zur Strahlung angeregt werden. Des Weiteren sind mindestens zwei Kameras vorgesehen, die zu mindestens zwei verschiedenen Zeiten t₁, t₂ eine zeitgleiche Aufnahme machen. Hierbei wird dasselbe Voxel (Volumenelement) an der Position (x ,y, z) aus dem Volumen auf die Bildebene durch Abbildungsgleichungen in den Kamerapunkten (xₙ, yₙ) der mindestens zwei Kameras abgebildet. Dann werden die Intensitäten der Voxel entlang der Sichtlinie auf den Kamerabildpunkten (xₙ, yₙ) zu den mindestens zwei verschiedenen Zeiten t₁, t₂ gemessen. Durch die Verrechnung der Intensitäten an den den Voxeln entsprechenden Bildpunkten (xₙ, yₙ) wird die Intensität des Voxels im Volumen rekonstruiert. Hierbei werden zur Bestimmung eines Interrogationsvolumens mit z. B. 32 x 32 x 32 Voxeln die Intensität aller Voxel gemäß den zuvor aufgeführten Schritten zu jeweils unterschiedlichen Zeiten t₁, t₂ ermittelt. Durch dreidimensionale Kreuzkorrelation wird zwischen den beiden Interrogationsvolumina zu den Zeitpunkten t₁ und t₂ der Verschiebungsvektor (dₓ, d_{y}, d_{z}) in dem Beobachtungsvolumen bestimmt, so dass sich hiermit ein komplettes Geschwindigkeitsfeld für das Beobachtungsvolumen ergibt.

Mit anderen Worten bedeutet dies, dass aus einem bestimmten Volumen mit Teilchen, die zur Strahlung angeregt werden, zunächst ein Volumenelement (Voxel) einer vorbestimmten Größe ausgesucht wird, wobei dieses Voxel durch zwei Kameras aus unterschiedlichen Stellungen betrachtet wird. Durch eine jede Kamera wird zu einem Zeitpunkt t₁ jeweils eine Bildaufnahme getätigt, wobei die Koordinaten des in dem Volumen befindlichen Voxels, das durch die Kameras betrachtet wird, jeweils auf den Kamerabildpunkten der jeweiligen Kamera durch die bekannten Abbildungsgleichungen zu dem Zeitpunkt t₁ abgebildet wird. Gleiches erfolgt zu einem weiteren Zeitpunkt t_{2.} Auf der Bildebene einer jeden Kamera befindet sich somit eine Abbildung des Voxels zu einer bestimmten Zeit mit einer bestimmten Intensität. Hierbei ist zu beachten, dass auf der Sichtlinie nicht nur die Intensität eines einzelnen Voxels auf der Bildebene abgebildet wird, sondern die Intensitäten aller Voxel entlang der Sichtlinie in dem beleuchteten Volumen werden auf den Bildpunkt aufintegriert. Die Intensität eines Voxels wird nun aus der Intensität der abgebildeten Bildpunkte mathematisch gemäß der Lehre der Unteransprüche 3 und 5 oder ähnlichen Verfahren rekonstruiert. Die Bestimmung der Intensität eines Voxels reicht nun zur Ermittlung des dreidimensionalen Geschwindigkeitsfeldes noch nicht aus. Vielmehr ist erforderlich, dass die Bestimmung der Intensität für eine Vielzahl von Voxeln in dem Beobachtungsvolumen wiederholt wird. Aus dieser Vielzahl von Voxeln mit den entsprechenden Intensitäten wird dann ein sogenanntes Interrogationsvolumen jeweils zu den Zeiten t₁ und t₂ berechnet. Ein solches Interrogationsvolumen besteht z. B. aus 32 x 32 x 32 Voxeln. Dieses Interrogationsvolumen, das durch eine Vielzahl von Voxeln bestimmt ist, besitzt ein bestimmtes Intensitätsfeld jeweils zu den Zeitpunkten t₁ und t₂. Durch eine dreidimensionale Kreuzkorrelation zwischen den Interrogationsvolumina zu den Zeiten t₁ und t₂ ist nunmehr die Bestimmung des Verschiebungsvektors (dₓ, d_{y}, d_{z}) möglich, wobei entsprechend die Verschiebung mit dem höchsten Korrellationskoeffizienten die wahrscheinlichste Verschiebung zwischen den beiden Interrogationsvolumina zu den Zeitpunkten t₁, t₂ darstellt. Zur Darstellung eines 3D-Geschwindigkeitsfeldes wird für jedes Interrogationsvolumen in dem Beobachtungsvolumen ein Verschiebungsvektor berechnet.

Der Vorteil dieses Verfahrens besteht darin, dass es relativ unempfindlich gegenüber Teilchenüberlappungen in den jeweiligen Kamerabildern ist, da nicht einzelne Teilchen mit der Annahme einer bestimmten Form lokalisiert werden müssen, wie z. B. bei 3D-PTV-Verfahren, sondern der Verschiebungsvektor mit einer fehlertoleranten statistischen Korrelationsanalyse berechnet wird. Falsche Voxelintensitäten werden statistisch gemittelt und werden gegenüber dem wahren Korrelationspeak unterdrückt.

Das Verfahren setzt zur Bestimmung der Abbildungsparameter eine genaue Volumenkalibrierung voraus, die üblicherweise aus mehreren Ansichten einer bekannten Kalibrierplatte berechnet wird. Zusätzlich besteht die Möglichkeit, die Abbildungsparameter für die Abbildungsgleichung ganz oder teilweise mit Hilfe einer Selbstkalibrierung auf die aufgenommenen Teilchenbilder zu bestimmen. Beide Varianten sind auch bereits in der DE 103 12 696.1.

Weitere vorteilhafte Merkmale und Ausgestaltungen der Erfindung sind den abhängigen Ansprüchen zu entnehmen.

So ist insbesondere vorgesehen, dass die Rasterung der Interrogationsvolumina feiner gewählt ist, als die äquivalente Pixelgröße der Kameras, so dass mehrere Voxel einer zu der Kamera senkrechten Beobachtungsebene der Größe eines Pixels xₙ, yₙ entsprechen und die Intensität der Voxel aus einer subpixel genauen Interpolation der Intensitäten der Kamera-Bildpunkte xₙ, yₙ der Kameras berechnet wird. Das bedeutet, dass die Voxel kleiner sein sollen, als die Pixel einer Kamera, so dass eine genauere Bestimmung der Intensität der Voxel möglich ist.

Weiterhin ist vorgesehen, dass die Intensitäten der Voxel durch das Minimum der Intensitäten der auf den Kameras 1 und 2 abgebildeten entsprechenden Bildpunkte bestimmt werden. Da es sein kann, dass der Bildpunkt nicht nur die Intensität des einen Voxels aufnimmt, sondern auch die Intensitäten anderer Voxel entlang der Sichtlinie, kann es sein, dass der Bildpunkt eine zu hohe Intensität aufweist, während der entsprechende Bildpunkt der anderen Kamera die Intensität nur eines Voxels aufnimmt, und daher die wirkliche Intensität wiedergibt. Hierbei wird dann das Minimum der ermittelten Intensitäten der Bildpunkte beider Kameras der weiteren Berechnung zugrunde gelegt wird.

Eine weitere Möglichkeit, um solche Fehler bei der Bestimmung der Intensitäten nach Möglichkeit zu minimieren, besteht darin, dass die Intensitäten in einem Voxel durch Multiplikation der abgebildeten Bildpunkte der Kameras bestimmt werden.

Eine vorteilhafte Variante besteht darin, das Beobachtungsvolumen z. B. in dünnen Schichten auszuleuchten, da dann entlang einer Sichtlinie weniger beleuchtete Voxel liegen, und damit die Rekonstruktion der Voxelintensitäten stabiler und genauer wird, während auf der anderen Seite immer noch ein Geschwindigkeitsfeld mit einer großen räumlichen Tiefe bestimmt werden kann.

Anhand der Zeichnung wird die Erfindung nachstehend beispielhaft näher erläutert.

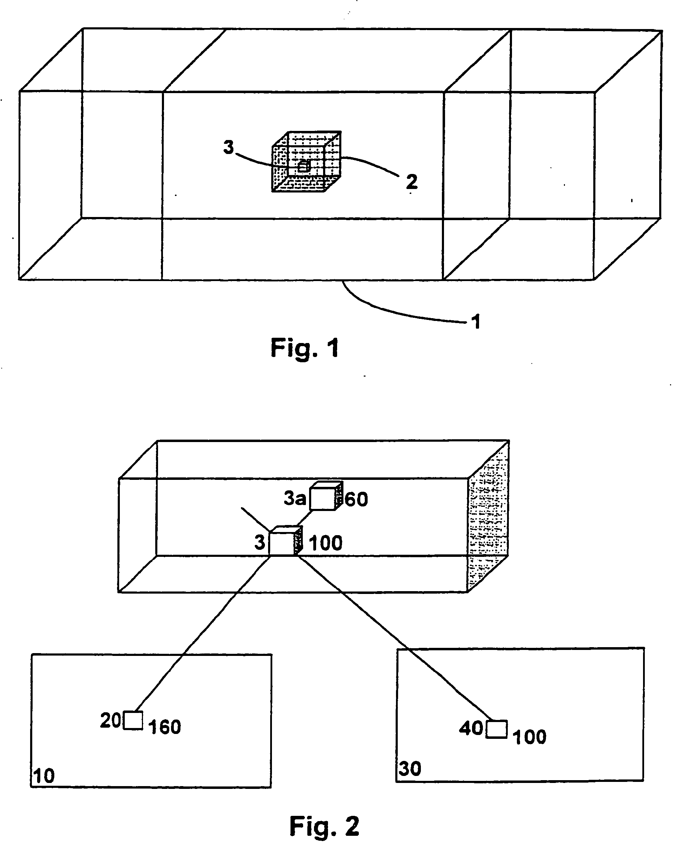

- Figur 1: stellt ein Voxel in einem Interrogationsvolumen in einem Beobachtungsvolumen dar;
- Figur 2: zeigt schematisch die Problematik der Ermittlung der wahren Intensität eines Voxels.

In dem Kamerabild von Kamera 10 empfängt das Pixel 20 Licht von den Volumenelementen (Voxel) 3 und 2a mit einer Gesamtintensität von 160 Counts. In dem Kamerabild von Kamera 30 empfängt das Pixel 40 nur Licht vom Volumenelement 3 mit einer Intensität von 100 Counts. Bei der Rekonstruktion des Voxels 3 ergibt das Minimum der Intensität von Pixel 20 und 40 die korrekte Voxel-Intensität von 100 Counts.

## Patentansprüche

1. Verfahren zur Bestimmung eines dreidimensionalen Geschwindigkeitsfeldes in einem Volumen, wobei durch Beleuchtung des Volumens die in dem Volumen befindlichen Teilchen zur Strahlung angeregt werden,
a) wobei durch mindestens zwei Kameras zu mindestens zwei unterschiedlichen Zeiten (t₁, t₂) jeweils zeitgleich das Beobachtungsvolumen aufgenommen wird,
b) wobei das Beobachtungsvolumen in kleine Volumenelemente (Voxel) aufgeteilt wird,
c) wobei jedes Voxel an der Stelle (x,y,z) durch eine Abbildungsgleichung auf die Bildpunkte (xₙ, yₙ) der mindestens zwei Kameras abgebildet wird,
d) wobei die Intensität aller Voxels aus der gemessenen Intensität der jeweils zugehörigen Bildpunkte (xₙ, yₙ) rekonstruiert wird,
e) wobei mehrere Voxel zu einem Interrogationsvolumen zusammengefasst werden,
f) wobei durch eine dreidimensionale Kreuzkorrelation der beiden Interrogationsvolumina zu den Zeiten (t₁, t₂) an derselben Stelle der Verschiebungsvektor (dₓ, d_{y}, d_{z}) bestimmt wird.

2. Verfahren nach Anspruch 1,
**dadurch gekennzeichnet,**
**dass** die Rasterung der Interrogationsvolumina feiner gewählt ist, als die äquivalente Pixelgröße der Kameras, so dass mehrere Voxel einer zu der Kamera senkrechten Beobachtungsebene der Größe eines Pixels (xₙ, yₙ) entsprechen.

3. Verfahren nach Anspruch 2,
**dadurch gekennzeichnet,**
**dass** die Intensität der Voxel aus einer subpixelgenauen Interpolation der Intensitäten der Bildpunkte (xₙ, yₙ) der Kameras berechnet wird.

4. Verfahren nach Anspruch 1,
**dadurch gekennzeichnet,**
**dass** die Intensitäten eines Voxels an der Stelle (x, y, z) durch das Minimum der Intensitäten der abgebildeten Punkte (xₙ, yₙ) der Kameras bestimmt werden.

5. Verfahren nach Anspruch 4,
**dadurch gekennzeichnet,**
**dass** die Kamerabilder mit Hilfe der lokalen Kameraempfindlichkeiten normiert werden.

6. Verfahren nach Anspruch 1,
**dadurch gekennzeichnet,**
**dass** die Intensität eines Voxels an der Stelle (x, y, z) durch Multiplikation der abgebildeten Bildpunkte (xₙ, yₙ) der Kameras bestimmt wird.

7. Verfahren nach Anspruch 1,
**dadurch gekennzeichnet,**
**dass** das Volumen nur teilweise in mehreren dünnen Ebenen ausgeleuchtet wird

## Claims

1. A method of determining a three-dimensional velocity field in a volume, the particles within the volume being excited to radiate by illuminating said volume,
a) at least two cameras simultaneously image capturing the observation volume at two different instants of time (t₁, t₂) at least,
b) the observation volume being divided into small volume elements (voxels),
c) each voxel being projected at the location (x, y, z) onto the image points (xₙ, yₙ) of the at least two cameras using a projection equation,
d) the intensity of all the voxels being reconstructed from the measured intensity of the respective ones of the associated image points (xₙ, yₙ),
e) a plurality of voxels being combined to form an interrogation volume,
f) the displacement vector (dₓ, d_{y}, d_{z}) being determined at the times (t₁, t₂) at the same location by a three-dimensional cross correlation of the two interrogation volumes.

2. The method in accordance with claim 1,
**characterized in**
**that** the grid selected for the interrogation volumes is equal finer than the equivalent pixel size of the cameras so that several voxels of an observation plane normal to the camera equal the size of one pixel (xₙ, yₙ).

3. The method in accordance with claim 2,
**characterized in**
**that** the intensity of the voxels is calculated from a subpixel accurate interpolation of the intensities of the image points (xₙ, yₙ) of the cameras.

4. The method in accordance with claim 1,
**characterized in**
**that** the intensities of a voxel at the location (x, y, z) are determined by the minimum of the intensities of the projected points (xₙ, yₙ) of the cameras.

5. The method in accordance with claim 4,
**characterized in**
**that** the camera images are normalized using the local camera sensitivities.

6. The method in accordance with claim 1,
**characterized in**
**that** the intensity of a voxel at the location (x, y, z) is determined by multiplicative algebraic reconstruction technique (MART).

7. The method in accordance with claim 1,
**characterized in**
**that** the volume is illuminated in parts only in several thin planes.

## Revendications

1. Procédé de détermination dans un volume d'un champ de vitesse tridimensionnel, les particules se trouvant dans le volume étant excitées en vue de leur rayonnement par illumination du volume,
a) au moins deux caméras prenant en même temps une photo du volume de recherche à au moins deux moments différents (t₁, t₂),
b) le volume de recherche étant divisé en petits éléments de volume (voxels),
c) chaque voxel étant reproduit à l'endroit (x, y, z) sur les points images (xₙ, yₙ) des au moins deux caméras moyennant une équation de reproduction,
d) l'intensité de tous les voxels étant reconstruite à partir de l'intensité mesurée des points image (xₙ, yₙ) respectivement associés,
e) plusieurs voxels étant regroupés en un volume d'interrogation,
f) le vecteur de déplacement (dₓ, d_{y}, d_{z}) étant déterminé par une corrélation croisée tridimensionnelle des deux volumes d'interrogation aux moments (t₁, t₂).

2. Procédé selon la revendication 1,
**caractérisé en ce**
**que** le tramage choisi pour les volumes d'interrogation est plus fin que la taille des pixels équivalente des caméras de sorte que plusieurs voxels d'un plan de recherche perpendiculaire à la caméra correspondent à la taille d'un pixel (xₙ, yₙ).

3. Procédé selon la revendication 2,
**caractérisé en ce**
**que** l'intensité des voxels est calculée à partir d'une interpolation au sous-pixel près des intensités des points image (xₙ, yₙ) des caméras.

4. Procédé selon la revendication 1,
**caractérisé en ce**
**que** les intensités d'un voxel à l'endroit (x, y, z) sont déterminées par le minimum des intensités des points (xₙ, yₙ) reproduits des caméras.

5. Procédé selon la revendication 4,
**caractérisé en ce**
**que** les photos prises par les caméras sont standardisées à l'aide de sensibilités locales des caméras.

6. Procédé selon la revendication 1,
**caractérisé en ce**
**que** l'intensité d'un voxel à l'endroit (x, y, z) est déterminée par la multiplication des points image (xₙ, yₙ) reproduits des caméras.

7. Procédé selon la revendication 1,
**caractérisé en ce**
**que** le volume n'est illuminé qu'en partie en plusieurs couches fines.
